Europäisches Patentamt

European Patent Office

Office européen des brevets

(11) Veröffentlichungsnummer: **0 352 577**
**A2**

## (12) EUROPÄISCHE PATENTANMELDUNG

(21) Anmeldenummer: **89113020.5**

(51) Int. Cl.⁴: **B60S 3/04**

(22) Anmeldetag: **15.07.89**

(30) Priorität: **26.07.88 DE 3825346**

(43) Veröffentlichungstag der Anmeldung:
**31.01.90 Patentblatt 90/05**

(84) Benannte Vertragsstaaten:
**DE ES FR GB IT**

(71) Anmelder: **Kleindienst GmbH**
**Argonstrasse 8**
**D-8900 Augsburg(DE)**

(72) Erfinder: **Donner, Sigmar**
**Am Hopfengarten 38**
**D-8904 Friedberg(DE)**

(74) Vertreter: **Ernicke, Hans-Dieter, Dipl.-Ing. et al**
**Patentanwälte Dipl.-Ing. H.-D. Ernicke**
**Dipl.-Ing. Klaus Ernicke Schwibbogenplatz**
**2b**
**D-8900 Augsburg(DE)**

(54) **Portalwaschanlage.**

(57) Die Erfindung betrifft eine Portalwaschanlage (1), mit mindestens einem fahrbaren Waschportal (2), das mehrere Behandlungsaggregate (3,4) in Form von horizontalen oder vertikalen Waschbürsten, Trockendüsen etc. beinhaltet. Die Behandlungsaggregate (3,4) werden mittels regelbarer Antriebe (6,7) bewegt, die mit einer Fahrzeugkonturenerfassung (8,9) in Verbindung stehen. Auf diese Weise werden die Behandlungsaggregate (3,4) mit unterschiedlichen, in Abhängigkeit von der Steigung der Fahrzeugkontur regelbaren Fahrgeschwindigkeiten über das Fahrzeug (5) bewegt. Die regelbaren Antriebe (6,7) bestehen aus Drehstrommotoren (11) mit Frequenzumformern (12), die von einer mikroprozessorgesteuerten Programmsteuerung (10) beaufschlagt werden.

Fig. 1

# Portalwaschanlage

Die Erfindung betrifft eine Portalwaschanlage mit den Merkmalen im Oberbegriff des Hauptanspruches.

Bei bekannten Portalwaschanlagen, insbesondere stationären Anlagen mit stehendem Fahrzeug und bewegtem Portal, fährt letzteres mit konstanter Geschwindigkeit über das Fahrzeug, während die Behandlungsaggregate, wie Waschbürste oder Trockendüse, getaktet und in Abhängigkeit von der Fahrzeugkontur gehoben und gesenkt werden. An steilen Fronten oder Hindernissen muß das Portal stoppen, was zu kräftigen Erschütterungen und einer hohen mechanischen Beanspruchung des Portales führt. Desgleichen gibt es Nachlaufprobleme beim Überfahren von Heckkanten. Die Fahrgeschwindigkeit beim Waschen und Trocknen kann damit nicht beliebig hoch gewählt werden, was sich in einer Begrenzung des Fahrzeugdurchsatzes niederschlägt.

Es sind zwar Waschportale mit polumschaltbaren Motoren bekannt, die zwei verschiedene Fahrgeschwindigkeiten gestatten. Hierbei bleibt allerdings die einmal gewählte Fahrgeschwindigkeit während eines jeden Durchlaufes konstant und wird nur je nach Art der Behandlungsverfahren zwischen den Durchläufen umgeschaltet. Für den Auftrag von Behandlungsflüssigkeiten wird die höhere Geschwindigkeit eingesetzt, während es für das Waschen und Trocknen bei der niedrigeren Geschwindigkeit verbleibt.

Nachteilig ist bei den bekannten Anlagen auch die Folgesteuerung, die die Heb- und Senkbewegungen der Waschbürste oder der Trockendüse erst nach erfolgtem Stop des Portales einschaltet.

Zur Leistungssteigerung einer Portalwaschanlage wurde bereits mit der DE-OS 36 16 817 vorgeschlagen, zwei komplette Portale miteinander zu koppeln, um bei konstanter Fahrgeschwindigkeit und doppelter Aggregatanordnung nur einen Durchlauf für Waschen und Trocknen zu erzielen. Normalerweise ist es erforderlich, zur Erzielung eines qualitativ guten Waschergebnisses zweimal über das Fahrzeug zu fahren.

Es ist daher Aufgabe der vorliegenden Erfindung, eine Portalwaschanlage aufzuzeigen, die eine höhere Leistung besitzt und die einer geringeren mechanischen Beanspruchung unterliegt.

Die Erfindung löst diese Aufgabe mit den Merkmalen im Kennzeichen des Hauptanspruches. Erfindungsgemäß bewegen sich die Behandlungsaggregate während des Durchlaufes mit variablen Geschwindigkeiten, die von der örtlichen Steigung der Fahrzeugkontour abhängen.

Die Geschwindigkeit der Behandlungsaggregate setzt sich zusammen aus der Fahrgeschwindigkeit des Portales und der Hub- und Senkgeschwindigkeit der Aggregate innerhalb des Portales.

Vorzugsweise wird zumindest die Fahrgeschwindigkeit des Portales geregelt. Die Hub- und Senkbewegungen können dazu in bekannter Weise taktend ausgeführt werden. Je größer die Konturensteigung ist, desto langsamer fährt das Portal, während umgekehrt an geringen Steigungen die Fahrgeschwindigkeit erhöht wird.

Auf horizontalen Karosserieflächen, wie einer langen Motorhaube oder dem Dach, können damit sehr hohe Fahrgeschwindigkeiten erzielt werden, die deutlich über den bislang verwendeten feineingestellten Fahrgeschwindigkeiten liegen. Andererseits wird die Geschwindigkeit an den schrägen oder steilen Flächen, wie dem Fahrzeugbug, Heck und den Scheibenbereichen auf einen der dortigen Steigung entsprechenden optimalen Wert verringert. Insgesamt ergibt sich damit eine Zeitverkürzung beim Waschen und eine Leistungssteigerung der Portalwaschanlage, da die rechnerische mittlere Geschwindigkeit höher als bei bekannten Anlagen liegt.

Mit der Erfindung ist es aber auch möglich, die Behandlungsaggregate mit regelbaren Hubantrieben zu versehen und somit beide Bewegungen oder auch nur die Hub-und Senkbewegung zu regeln. Hierdurch kann ein Takten der Aggregatsbewegung vermieden und eine insgesamt leichtere und weichere Bewegungslinie erzielt werden. Für die Waschbürste wirkt sich das in einem ständigen Kontakt und einer gleichbleibenden Eintauchtiefe an den schrägen und steilen Fahrzeugflächen aus. Dies kommt einem verbesserten Waschergebnis zugute.

Erfindungsgemäß werden zur Geschwindigkeitsvariation regelbare Antriebe eingesetzt, deren Geschwindigkeit von einer Konturenerfassung beeinflußt wird. Als Antrieb eignen sich insbesondere Drehstrommotoren mit Frequenzumformern, die von einer frei programmierbaren Programmsteuerung beaufschlagt werden.

In der erfindungsgemäßen Portalwaschanlage wird die Steigung der Fahrzeugkontur auf unterschiedliche Weise erfaßt, beispielsweise durch eine Lichtschrankenanordnung, eine Messung des Bürstendrehmomentes oder dgl. Eine Lichtschrankenanordnung hat hierbei den Vorteil, daß sie Steigungen oder Hindernisse vorher erkennt und ein weiches, abgeregeltes Abbremsen und Ausweichen der Behandlungsaggregate erlaubt. Harte Bremsstops kommen bei der erfindungsgemäßen Portalwaschanlage ohnehin nicht mehr vor. Desgleichen sind auch die Nachlaufprobleme geringer.

Die Erfindung ist in den Zeichnungen beispielsweise und schematisch dargestellt. Im einzelnen zeigen:

Fig. 1 eine Portalwaschanlage in Seitenansicht mit einer Waschbürste und

Fig. 2 eine Variation der Portalwaschanlage mit einer Trockendüse.

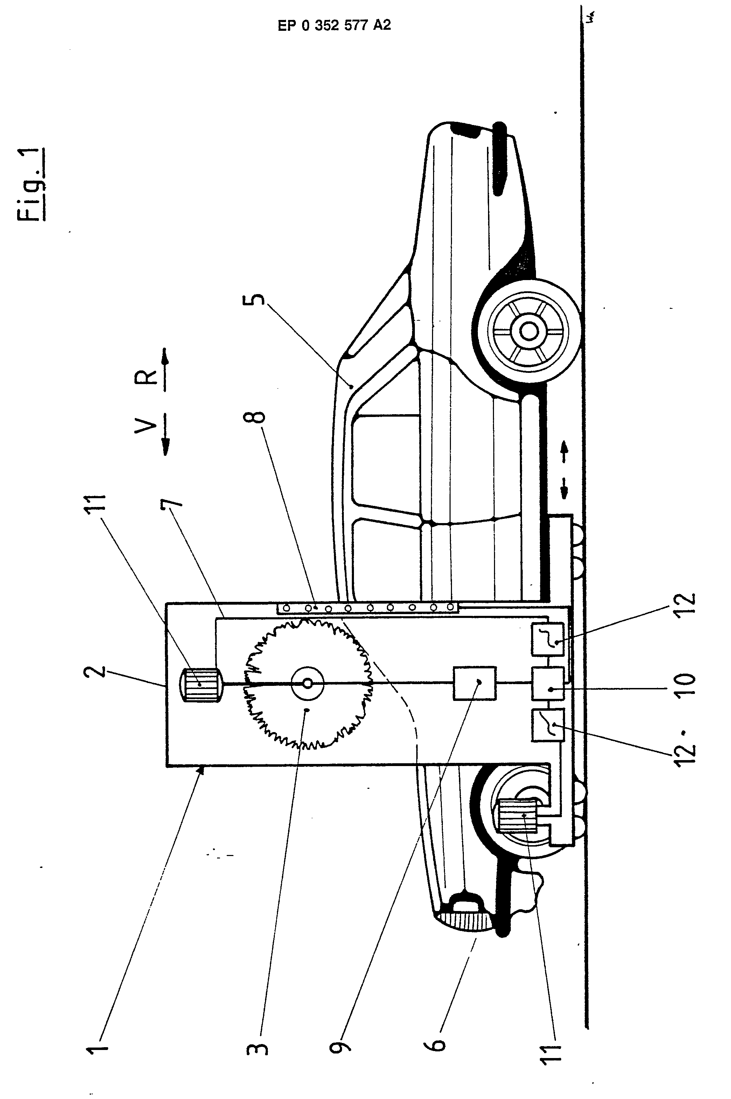

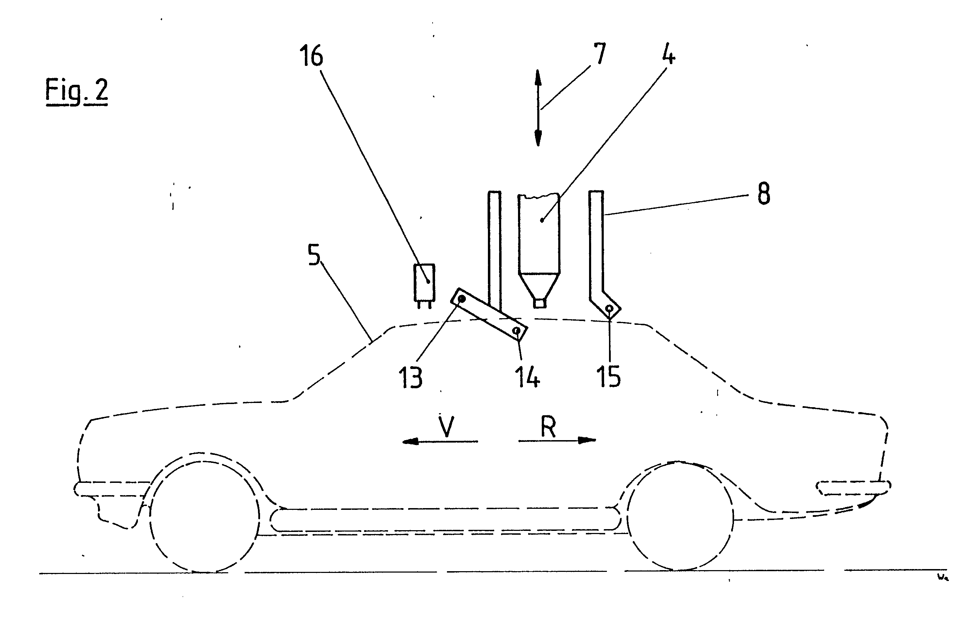

Fig. 1 zeigt eine Portalwaschanlage (1), in der sich das Portal (2) gegenüber einem stehenden Fahrzeug (5) vorwärts und rückwärts gemäß den Pfeilen bewegt. Das Portal (2) übergreift das Fahrzeug (5) und beinhaltet mehrere Behandlungsaggregate (3,4), von denen in Fig. 1 nur eine horizontale Waschbürste (3) dargestellt ist. Dazu können noch weitere Waschbürsten, insbesondere vertikale Waschbürsten und eine Trocknereinheit mit einer oder mehreren Trockendüsen (vgl. Fig. 2) kommen. Die weiteren Aggregate, wie Sprüh- oder sonstige Auftragevorrichtungen zählen ebenfalls zu den Behandlungsaggregaten, sind aber der Übersichtlichkeit wegen nicht dargestellt.

Das Portal (2) besitzt ein Fahrwerk und ist vorzugsweise auf Schienen beidseits des Fahrzeuges (5) geführt. Das Portal (2) weist einen regelbaren Fahrantrieb (6) auf, der es erlaubt, das Portal (2) in Abhängigkeit von der Steigung der Fahrzeugkonturen zu bewegen. Die Fahrzeugkontur, hier insbesondere die Kontur in Seitenansicht gemäß Fig. 1, wird über eine Lichtschrankenanordnung (8) und/oder eine Drehmomentenmessung (9) der Waschbürste (9) erfaßt. Hierbei handelt es sich um mitbewegte Meßanordnungen. Es sind aber auch beliebige andere Möglichkeiten zur Konturenerfassung, auch stationärer Art, möglich. Beispielsweise kann am Eingang der Waschanlage eine Lichtschrankenanordnung vorgesehen sein, die das einfahrende Fahrzeug kontinuierlich abtastet und die Meßwerte in einen Konturenspeicher schreibt, der am Ende die Gesamtkontur beinhaltet und an die Steuerung der Portalwaschanlage meldet.

Der regelbare Antrieb (6) besteht aus einer Programmsteuerung (10), vorzugsweise einer mikroprozessorgesteuerten Steuerung, der die Meßwerte der Konturenerfassung (8,9) zugeführt werden. Ausgangsseitig ist die Programmsteuerung (10) mit einem oder mehreren Frequenzumformern (12) verbunden, die entsprechend der Konturensteigung mit Stellsignalen beaufschlagt werden. Die Frequenzumformer (12) sind ihrerseits mit einem Drehstrommotor (11) verbunden. Entsprechend des Progammsteuerungssignales verändert der Frequenzumformer (12) die Frequenz des Motorstroms und damit die Motordrehzahl. Über die Programmsteuerung (10) ist der Frequenzumformer (12) stufenlos einstellbar.

Im gezeigten Ausführungsbeispiel ist auch der Hubantrieb (7) der Waschbürste (3) in Abhängigkeit von der Konturensteigung geregelt. Hierzu ist ein zweiter Frequenzumformer (12) vorgesehen, der von der Programmsteuerung (10) beaufschlagt wird, und die Geschwindigkeit des Drehstrom-Hubmotores (11) beeinflußt.

In gleicher Weise ist der Hubantrieb (7) der Trockendüse (4) (vgl. Fig. 2) ausgebildet, der für eine optimale und möglichst knappe Annäherung der Trockendüse (4) an die Fahrzeugflächen sorgt. Je geringer dieser Abstand ist, desto besser ist die Trocknungswirkung und desto geringer die erforderliche Ventilatorleistung. Sofern weitere Behandlungsaggregate vorgesehen sind, können diese ebenfalls über regelbare Antriebe in der vorbeschriebenen Art verfügen.

Nachfolgend wird die Funktion anhand eines Beispiels mit der horizontalen Waschbürste (3) gemäß Fig. 1 und einer Konturenerfassung über Drehmomentenmessung erläutert:

Zu Beginn des Waschvorganges steht das Portal (2) vor dem Fahrzeug (5) und wird mit abgesenkter Waschbürste (3) auf dieses in Richtung des Pfeiles R zubewegt. Sobald die Waschbürste (3) mit dem Fahrzeug in Eingriff gerät, steigt das Bürstenmoment bzw. der hierfür erforderliche Antriebsstrom. Über die Meßeinrichtung (9) erhält die Programmsteuerung (10) laufend ein der jeweiligen Momenthöhe entsprechendes Signal. Die Programmsteuerung (10) verlangsamt bei steigendem Moment über den Frequenzumformer (12) die Geschwindigkeit des Portal-Fahrantriebes (6), während zugleich die Waschbürste (3) zu klettern beginnt. Ist die Frontpartie sehr steil, wird die Portalgeschwindigkeit mit dem schnell zuhmunendem Bürstenmoment ebenfalls schnell verringert, und kann bei Erreichen eines vorgegebenen maximalen Drehmomentes auch auf Null reduziert werden.

Ist, wie in Fig. 1, auch ein regelbarer Hubantrieb (7) vorgesehen, klettert bei steilen Frontpartien die Waschbürste (3) über die Regelung entsprechend schnell hoch, um möglichst einen Fahrstop des Portales zu vermeiden.

Ein Überfahren der horizontalen Frontkante macht sich in einem Drehmomentenabfall bemerkbar, auf den die Programmsteuerung (10) die Fahrgeschwindigkeit des Portales (2) erhöht, und die Bürste (3) auf die Motorhaube zurückbewegt. Entlang der Motorhaube mit dessen geringer Steigung wird das Portal (2) entsprechend beschleunigt.

Wird die Frontscheibe erreicht, was sich in einer Momentenerhöhung bemerkbar macht, wird die Fahrgeschwindigkeit des Portales (2) wieder verringert und die Waschbürste (3) beginnt kontinuierlich zu klettern. Die Programmsteuerung (10) gestattet es, die Fahr- und Klettergeschwindigkeit so gegeneinander abzugleichen und zu optimieren, daß die Waschbürste (3) entlang der schrägen Fläche stets in Kontakt mit der Scheibe bleibt und dabei eine gleichmäßige Eintauchtiefe aufweist.

Nach Überfahren der vorderen Dachkante wird die Waschbürste (3) wieder zurückgesetzt und nach Kontakt mit der Dachfläche das Portal wieder beschleunigt. Hierbei ergeben sich, wie bei der Motorhaube weiche Anfahrlinien ohne ein Rütteln sowie eine optimale Fahrgeschwindigkeit des Portales (2).

Nach Überfahren der heckseitigen Dachkante wird das Portal (2) weich abgebremst und nach Überfahren gegebenenfalls zum Fahrzeug (5) zurückbewegt. Im Heckbereich der Scheibe und der steil abfallenden rückwärtigen Front läuft der vorstehend für den vorderen Bereich beschriebene Vorgang mit umgekehrten Vorzeichen ab.
In ähnlicher Weise können auch die vertikalen Bürsten in die Regelung einbezogen werden.

Im Ausführungsbeispiel der Fig. 2 wird eine Lichtschrankenanordnung (8) zur Konturenerfassung eingesetzt. Vor und hinter der Trockendüse (4) ist jeweils eine Lichtschranke (13,15) mit horizontalem Abstand und auf gleicher Höhe angeordnet. Zwischen den beiden und etwas unterhalb ist eine dritte Lichtschranke (14) angeordnet, die in etwa mit der Trockendüse (4) fluchtet. Die Lichtschranken (13,14,15) bestehen jeweils aus Sender und Empfänger, die beidseits des Fahrzeugs (5) angeordnet sind. Sender und Empfänger sind jeweils mit dem Gestell der Trockendüse (4) verbunden und werden mit dieser auf und ab bewegt sowie mit dem Portal verfahren.

Sind die Lichtschranken (13) und (15) frei, und nur die Lichtschranke (14) vom Fahrzeug (5) bedeckt, hat die Trockendüse (4) den optimalen Abstand von der Fahrzeugoberfläche. Wird im Vorlauf gemäß Pfeil V die Lichtschranke (13) bedeckt, hat dies über die Portalsteuerung (10) ein Anheben der Trockendüse (4) zur Folge, bis die Lichtschranke (13) wieder frei ist. Sind umgekehrt die Lichtschranken (13) und (14) frei, wird die Trockendüse (4) abgesenkt, bis die Lichtschranke (14) oder (15) bedeckt ist. Wird nachfolgend die Lichtschranke (15), etwa nach Überfahren der Dachvorderkante, wieder freigegeben, senkt die Trockendüse (4) weiter ab. Der Rücklauf erfolgt entsprechend dem Vorlauf, jedoch mit dem Unterschied, daß die Lichtschranken (13) und (15) ihre Funktionen vertauschen.

Über diese Lichtschrankenanordnung (8) können sowohl die Trockendüse (4) wie auch die Waschbürste(n) (3) mit variablen, von der Fahrzeugkontur abhängigen Geschwindigkeiten bewegt werden.

Für die Trockendüse (4) sind hierbei auch aufragende Hindernisse, wie ein Taxischild (16) oder ein Skiständer kein Problem mehr. Bei Annäherung an das Taxischild (16) wird auf das Signal der Lichtschranke (13) das Portal (2) verlangsamt und zugleich der Hubantrieb (7) eingeschaltet. Das Hindernis kann dank der Geschwindigkeitsregelung ohne Stop sicher überfahren werden.

Die erfindungsgemäße Portalwaschanlage gestattet auch eine Anpassung an verschiedene Betriebszustände, indem die Regelgrenzwerte der Programmsteuerung (10) veränderbar sind. In Stoßzeiten kann damit die maximal mögliche Fahrgeschwindigkeit des Portales (2) zur Erhöhung des Durchsatzes voll ausgeschöpft werden, während bei geringerem Andrang ein niedrigeres Geschwindigkeitsniveau als Regelgrenzwert zugunsten eines verbesserten Waschergebnisses vorgegeben wird.
Die erfindungsgemäße Anordnung läßt sich mit Erfolg auch für bewegte oder stationäre Portale in instationären Anlagen (geschleppte Fahrzeuge) einsetzen. Für stationäre Portale kommt hierbei vor allem ein regelbarer Hubantrieb für die Behandlungsaggregate zum Tragen.

**STÜCKLISTE**

1 Portalwaschanlage
2 Portal
3 Behandlungsaggregat, Waschbürste
4 Behandlungsaggregat, Trockendüse
5 Fahrzeug
6 regelbarer Antrieb, Fahrantrieb
7 regelbarer Antrieb, Hubantrieb
8 Konturenerfassung, Lichtschrankenanordnung
9 Konturenerfassung, Bürstenmomentmessung
10 Programmsteuerung
11 Drehstrommotor
12 Frequenzumformer
13 Lichtschranke
14 Lichtschranke
15 Lichtschranke
16 Taxischild

**Ansprüche**

1.) Portalwaschanlage, bestehend aus mindestens einem fahrbaren Waschportal mit mehreren Behandlungsaggregaten, das relativ zum gewaschenen Fahrzeug bewegt wird, dadurch **gekennzeichnet**, daß die Behandlungsaggregate (3,4) mit unterschiedlichen, in Abhängigkeit von der Steigung der Fahrzeugkontur regelbaren Fahrgeschwindigkeiten über das Fahrzeug (5) bewegt werden.

2.) Portalwaschanlage nach Anspruch 1, dadurch **gekennzeichnet**, daß die Behandlungsaggregate (3,4) mittels regelbarer Antriebe (6,7) in Verbindung mit einer Fahrzeugkonturenerfassung (8,9) bewegt werden.

3.) Portalwaschanlage nach Anspruch 1 oder 2, dadurch **gekennzeichnet**, daß das Portal (2) einen regelbaren Fahrantrieb (6) aufweist.

4.) Portalwaschanlage nach Anspruch 1, 2 oder 3, dadurch **gekennzeichnet**, daß ein oder mehrere Bahandlungsaggregate (3,4) einen regelbaren Hubantrieb (7) aufweisen.

5.) Portalwaschanlage nach Anspruch 1 oder einem der folgenden, dadurch **gekennzeichnet**, daß die regelbaren Antriebe (6,7) eine Programmsteuerung (10) und Drehstrommotoren (11) mit Frequenzumformer (12) aufweisen.

6.) Portalwaschanlage nach Anspruch 1 oder einem der folgenden, dadurch **gekennzeichnet**, daß zur Konturenerfassung eine Lichtschrankenanordnung (8) vorgesehen ist.

7.) Portalwaschanlage nach Anspruch 1 oder einem der folgenden, dadurch **gekennzeichnet**, daß zur Konturenerfassung das Bürstendrehmoment (9) gemessen wird.

Fig. 1

EP 0 352 577 A2

Fig. 2

EP 0 352 577 A2